# EUROPÄISCHE PATENTSCHRIFT

(11) **EP 4 140 808 B1**
(45) Veröffentlichungstag und Bekanntmachung des Hinweises auf die Patenterteilung: **23.10.2024**
(21) Anmeldenummer: 22183229.8
(22) Anmeldetag: 06.07.2022
(51) Int. Cl.: B60P 3/34

(54) **DACHZELTANORDNUNG**
ROOF TENT ASSEMBLY
ENSEMBLE TENTE DE TOIT

(30) Priorität: 25.08.2021 DE 202021104564 U
(43) Veröffentlichungstag der Anmeldung: 01.03.2023
(60) Teilanmeldung: 24166228.7
(73) Patentinhaber: Krämer, Michael, 44867 Bochum (DE)
(72) Erfinder: Krämer, Michael, 44867 Bochum (DE)
(74) Vertreter: Osterhoff, Utz

(56) Entgegenhaltungen:
- WO-A1-2018/107196
- WO-A1-2020/013421
- CN-A- 106 476 674
- DE-U1- 202020 101 232
- JP-A- 2000 345 741
- US-A1- 2006 033 358

## Beschreibung

Die vorliegende Erfindung betrifft eine Dachzeltanordnung gemäß den Merkmalen im Oberbegriff von Anspruch 1.

Aus dem Stand der Technik sind seit vielen Jahren Dachzelte bekannt. Ein solches Dachzelt wird auf dem Dach eines Kraftfahrzeuges, Lastkraftwagens oder auch Anhängers montiert. Ursprünglich waren die Dachzelte selbst auf ihre im Montagezustand gegebene Grundfläche beschränkt. In den letzten Jahren wurden Dachzelte entwickelt, die insbesondere seitlich ausziehbar oder seitlich ausklappbar sind. Hierdurch wird es erreicht, dass eine Liegefläche, die beispielsweise im Ruhezustand auf einem Fahrzeugdach 2 m Länge und 1,20 m Breite hat, mitunter verdoppelt wird durch das seitliche Ausziehen oder Ausklappen.

Es gibt auch Dachzeltanordnungen, die zu beiden Seiten ausgeklappt werden. Hierdurch verdreifacht sich die zur Verfügung stehende Liegefläche.

Es können somit nicht nur 2 Personen, sondern 3 Personen oder gar ganze Familien, mithin 4 oder 5 Personen in einer Dachzeltanordnung übernachten.

Mit der Vergrößerung der zur Verfügung stehenden Liegefläche gehen jedoch auch Nachteile einher. Insbesondere erhöht sich das Gewicht des Dachzeltes selber. Darüber hinaus erhöht sich bei Benutzung des Dachzeltes und der Aufnahmemöglichkeit von mehr als 2 Personen, mithin 3 oder 4 Personen, ebenfalls das Gewicht durch die Personen im Dachzelt.

Dies wirkt sich nachteilig auf die zur Verfügung stehende Dachlast aus. Die statische Dachlast eines Kraftfahrzeuges beträgt mitunter nur 50 kg. Viele Fahrzeuge haben eine statische Dachlast von 75 kg. Es gibt auch Fahrzeuge mit einer statischen Dachlast von 100 kg. Ein handelsübliches Dachzelt, welches insbesondere ausziehbar oder ausklappbar ist, weist jedoch bereits ein Eigengewicht von deutlich mehr als 50 kg und insbesondere ca. 50 kg auf. Zumeist wird versucht, das Eigengewicht der Dachzelte selbst im zusammengeklappten Zustand auf 75 kg zu begrenzen, um somit für möglichst viele Kraftfahrzeugtypen mit einer auf 75 kg begrenzten statischen Dachlast einsetzbar zu sein. Weist das Dachzelt jedoch eine große Grundfläche auf und im ausgeklappten Zustand eine noch größere Grundfläche, so ist trotz der Verwendung von Leichtbauwerkstoffen wie glasfaserverstärktem Kunststoff oder auch Honeycomb-Böden aus Leichtmetall, ein gewisser Mindestmaterialeinsatz notwendig, um eine hinreichende Stabilität des Dachzeltes zu erreichen. Dies betrifft insbesondere den Boden des Dachzeltes sowie gegebenenfalls einen Deckel bzw. eine Haube des Dachzeltes. Auch sind Matratzenwerkstoffe aufgrund des relativ hohen benötigten Volumens wiederum schwer im Eigengewicht, wenn diese eingesetzt werden.

Bis das Dachzelt in Gebrauchsposition aufgeklappt bzw. ausgezogen ist, kann schnell eine statische Last von rund von 4 Personen sowie dem Eigengewicht des Dachzeltes selbst von 400 kg oder mehr erreicht werden. Bewegen sich die im Dachzelt befindlichen Personen, beispielsweise spielen Kinder hüpfend auf der Matratze oder ähnlichem, so steigt dadurch eine dynamische Dachlast nochmals um bis zu 100 kg oder mehr.

Beispielsweise ist aus der WO 2018/107 196 A1 eine Dachzeltanordnung bekannt. Das Dachzelt wird im geschlossenen Zustand entweder von einem Hardcover oder einem Softshell überdeckt.

Ferner ist aus der WO 2020/013 421 A1 eine Dachzeltanordnung bekannt. Hierbei sind zwei plattenartige Elemente, die im aufgeklappten Zustand den Boden des Dachzeltes bilden und im zusammengeklappten Zustand Oberseite und Unterseite einer Dachzeltabdeckung bilden, durch einen seitlich umlaufenden Planenstreifen miteinander abgeschlossen.

Ferner sind aus JP 2000 345741 A, CN 106 476 674 B, DE 20 2020 101232 U1 Dachzeltanordnungen bekannt, wie auch übliche Abdeckung im Allgemeinen, siehe US2006/033358A1.

Aufgabe der vorliegenden Erfindung ist es nunmehr, ausgehend vom Stand der Technik eine Möglichkeit aufzuzeigen, das Gewicht eines Dachzeltes, insbesondere hinsichtlich der statischen Dachlast in kostengünstiger Art und Weise zu verringern, sowie die Tragfähigkeit einer Dachzeltanordnung zu erhöhen.

Die zuvor genannte Aufgabe wird erfindungsgemäß bei einer Dachzeltanordnung mit den Merkmalen im Anspruch 1 gelöst.

Vorteilhafte Ausgestaltungsvarianten sind in den abhängigen Ansprüchen beschrieben.

Die Erfindung sieht vor, dass die Dachzeltanordnung auf einem Fahrzeugdach ein Dachzelt aufweist. Das Dachzelt ist in einer Ruheposition zusammengeklappt, in einer Gebrauchsposition aufgeklappt. Um die Gebrauchsposition einzunehmen, kann das Dachzelt entweder mit einer Schwenkbewegung aufgeklappt werden, sodass sich ein Zeltkörper während der Aufklappbewegung erhebt. Auch kann das Dachzelt seitlich ausgezogen werden. Mithin wird insbesondere bei der Gebrauchsposition die Liegefläche vergrößert. Das Dachzelt kann auch aufgestellt werden als Pop-up Dachzelt.

In der Ruheposition weist das Dachzelt eine obere Schale auf, welche das Dachzelt abdeckt. Die obere Schale ist durch eine Haube ausgebildet. Erfindungsgemäß ist die Schale jedoch nicht aus einem glasfaserverstärkten Kunststoff ausgebildet, sowie es im Stand der Technik bekannt ist. Vielmehr ist die Schale als Hybridhartschale ausgebildet durch einen Rahmen, der mit einer Folie beplankt bzw. überzogen ist. Hierdurch ist es möglich Gewicht einzusparen, sodass gegenüber insbesondere einem Hartschalendachzelt mit einer glasfaserverstärkten Haube bis zu mehreren Kilogramm eingespart werden können. Damit kann das Dachzelt, welches mit der erfindungsgemäßen Haube ausgestattet ist, entweder vergrößert werden oder generell das Gewicht des Dachzeltes reduziert werden.

Der Rahmen ist als gitterartige Struktur ausgebildet. Besonders bevorzugt werden hierzu Streben eingesetzt aus einem Leichtmetallwerkstoff oder auch aus einem Kunststoffwerkstoff. Die Plane wird dann bevorzugt an den Streben befestigt. Die Plane kann auch ein Tuch oder Zeltstoff sein.

Im zusammengeklappten Zustand ist die nach oben bzw. außen zeigende Dachfläche der Plane an mindestens einer Längsstrebe und/oder mindestens an einer Querstrebe des Rahmens befestigt. Eine entstehende Flatterbewegung während der Fahrt wird somit effizient vermieden.

Ein ergänzender Teil der Erfindung sieht vor, dass an dem Dachzelt lösbar seitliche Stützen angebracht werden können. Die Stützen stehen seitlich von dem Dachzelt über das Fahrzeug ab und sind dann auf die Vertikalrichtung schräg nach unten bzw. direkt gerade nach unten gerichtet. Die Stützen werden insbesondere in dem Kraftfahrzeug selbst bei Nichtgebrauch mitgeführt, um die statische Dachlast nicht zu erhöhen. Ist man an dem Zielort angekommen, so können zum Aufbau des Dachzeltes die Stützen seitlich schräg nach unten von dem Dachzelt an dem Fahrzeug vorbei angeordnet werden. Hierdurch wird die statische Dachlast deutlich erhöht. Diese kann damit auf weitaus über 100 kg, mitunter auch über 200 kg erhöht werden. Die Stützen werden insbesondere auf einem Untergrund abgestützt. Das Dachzelt kann somit bereits im statischen Zustand mit mehreren hundert kg mithin 3 oder 4 Personen belastet werden.

In einem bevorzugten Ausgestaltungsfall, der insbesondere, wenn das Dachzelt zur Seite des Fahrzeuges hin ausgeklappt bzw. ausgezogen wird, ist es möglich die Stützen derart anzuordnen, dass diese im Wesentlichen mittig unterhalb des Dachzeltes eine zusätzliche Steifigkeit ergeben. Ein weiterer Vorteil der Stützen ist, dass bei Bewegung im Dachzelt, beispielsweise, wenn sich eine schlafende Person im Schlaf umdreht, nicht die Autofederung für ein Aufschaukeln oder Nachschaukeln des Autos mit Dachzelt sorgt.

Damit die Stützen universell auf die Höhe bezogen eingesetzt werden können, sind diese entweder in verschiedenen Längen streckbar, besonders bevorzugt teleskopierbar ausgebildet. Besonders bevorzugt sind vier Stützen angeordnet, zwei auf jeder Seite. Zur weiteren Versteifung kann eine Quertraverse unterhalb des Bodens des Dachzeltes angeordnet sein. Die Stützen werden dann bevorzugt seitlich auf die Quertraverse aufgesteckt.

Weitere Vorteile, Merkmale, Eigenschaften und Aspekte der vorliegenden Erfindung sind Gegenstand der nachfolgenden Beschreibung. Bevorzugte Ausgestaltungsvarianten sind in schematischen Figuren dargestellt. Diese dienen dem einfachen Verständnis der Erfindung. Es zeigen:
- Figur 1: eine perspektivische Ansicht der erfindungsgemäßen Dachzeltanordnung
- Figur 2: eine teleskopierbare Stütze
- Figur 3: den Standfuß einer Stütze
- Figur 4: eine Frontansicht der erfindungsgemäßen Dachzeltanordnung
- Figur 5: eine perspektivische Ansicht auf eine Haube als Rahmen
- Figur 6: eine Seitenansicht, eine Längsschnittansicht gem. Fig. 5
- Figur 7 a + b: Detailansichten der Haube

In den Figuren werden für gleiche und ähnliche Bauteile dieselben Bezugszeichen verwendet, auch wenn eine wiederholte Beschreibung aus Vereinfachungsgründen entfällt.

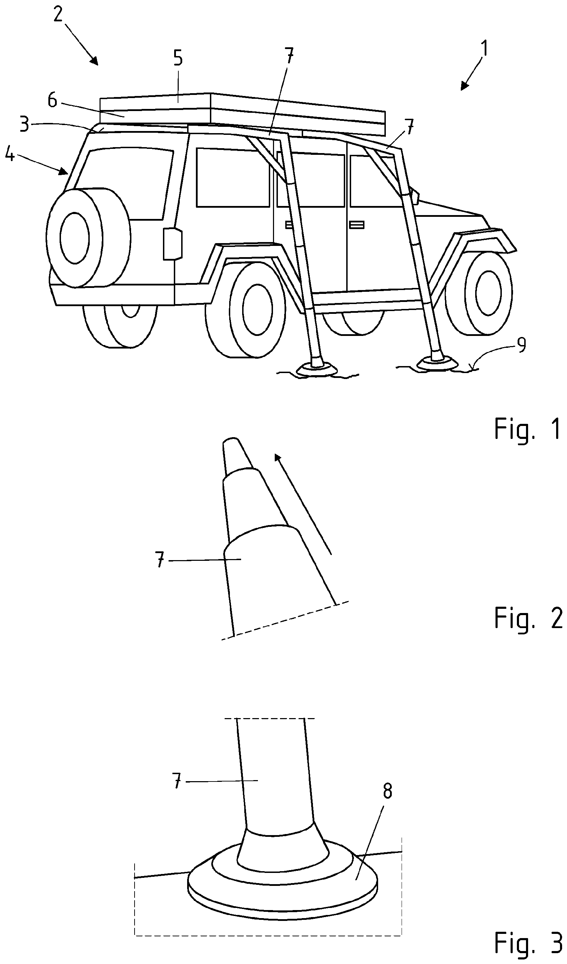

Figur 1 zeigt eine erfindungsgemäße Dachzeltanordnung in einer perspektivischen Ansicht 1. Das Dachzelt 2 befindet sich dabei in einer zusammengeklappten Ruheposition. Das Dachzelt 2 ist auf dem Dach 3 eines Kraftfahrzeuges 4 angeordnet. Das Dachzelt 2 weist in dieser Variante eine Oberschale 5 sowie eine Unterschale 6 auf. Die Oberschale 5 kann auch als Haube bezeichnet werden. Da nunmehr das Gewicht des Dachzeltes 2 inklusive der darin befindlichen Personen nicht durch die Dachlast des Kraftfahrzeuges 4 selbst reglementiert wird, sind seitlich abstehende Stützen 7 vorgesehen.

Die Stützen 7 selbst sind in Fig. 2 teleskopierbar ausgebildet. Gemäß Fig. 3 weisen die Stützen 7 an einem unteren Ende einen verbreiterten Fuß 8 auf, sodass sie auf einem Untergrund abgestellt werden können und auch bei weichem Oberboden des Untergrundes sicher aufstehen.

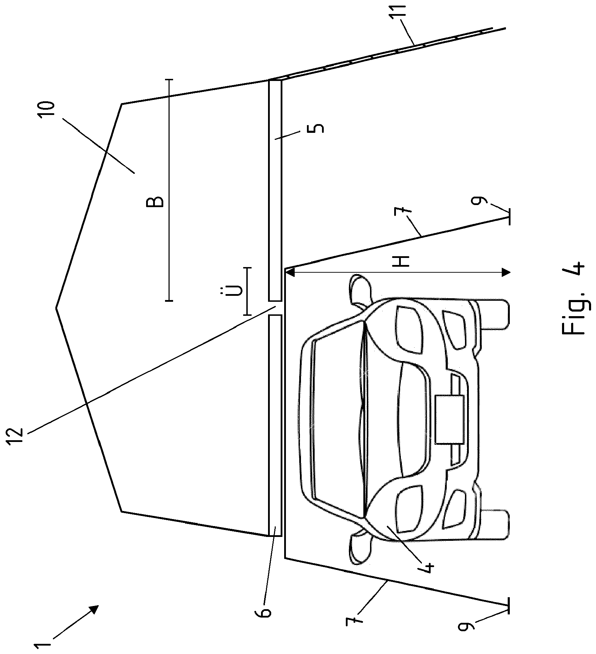

Fig. 4 zeigt eine Frontansicht. Hier ist gut zu erkennen, dass Oberschale 5 und Unterschale 6 ausgeklappt wurden durch eine 180° Schwenkbewegung. Die Oberschale 5 steht seitlich über dem Kraftfahrzeug 4 selbst über. Ein Zeltkörper bildet dann das Dachzelt 2 selber. Die zur Verfügung stehende Liegefläche an dem Dachzelt 2 wird durch Oberschale 5 und Unterschale 6 definiert und ist durch die Ausklappbewegung verdoppelt. Ferner befindet sich an einem außenseitigen Ende eine angedeutete Leiter 11. Die Leiter 11 dient ebenfalls zur Stabilisierung bzw. Abstützung des Dachzeltes 2.

Erfindungsgemäß ist nunmehr vorgesehen, dass die Stützen 7 lösbar von außen an die Dachzeltanordnung 1 angesteckt bzw. eingesteckt werden können und dann die Höhe individuell teleskopiert beispielsweise durch zusammensteckbare und/oder teleskopierbare Stützen definiert werden kann. Ferner ist ersichtlich, dass die Stützen 7 auf einer Seite, konkret auf die Bildebene bezogen auf der rechten Seite des Kraftfahrzeuges 4, mit einem Überstand Ü 8 seitlich über das Kraftfahrzeug 4 überstehen. Es hat sich als besonders vorteilig erwiesen, wenn der Überstand Ü 10 % bis 50 %, besonders bevorzugt 20 % bis 30 % der Breite B des Dachzeltes 2 bzw. der Oberschale 5 entspricht. Hierdurch kann die Stabilität und Standfestigkeit des Dachzeltes 2 deutlich erhöht werden. Das Dachzelt 2 ist somit insgesamt über die Stützen 7 auf die Bildebene bezogen links, über das Kraftfahrzeug 4 selbst, über die Stützen 7 rechts sowie über die Leiter 11 abgestützt. Ein angedeuteter Scharnierkörper 12 verbindet beide Schalen des Dachzeltes 2.

Alternativ zu insbesondere der Unterschale 6 kann auch ein flacher Boden ausgebildet sein, sodass die Oberschale 5 in zusammengeklapptem Zustand gemäß Fig. 1 alles überdeckt.

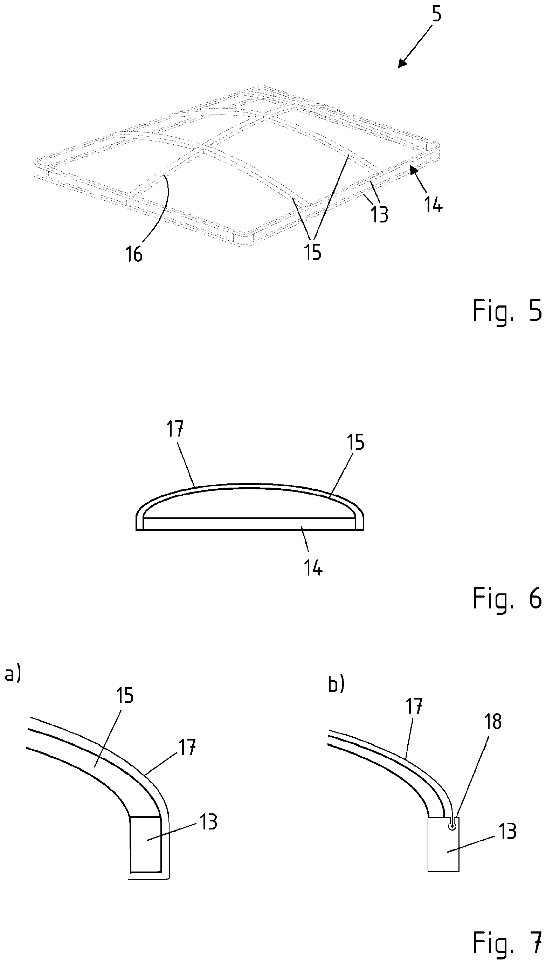

Die Erfindung ist dargestellt in Fig. 5. Hier ist eine Haube bzw. Oberschale 5 des Dachzeltes 2 gezeigt. Diese weist eine Rahmenkonstruktion 14 auf. Insbesondere ist die Rahmenkonstruktion 13 gitterartig ausgebildet. Ein umlaufender Rahmen 14 kann beispielsweise aus einem Aluminiumprofil oder Kunststoffprofil ausgebildet sein. Dieser ist dann durch Querstreben 15 und/ oder Längsstreben 16 verbunden.

Fig. 6 zeigt eine Seitenansicht. Dargestellt ist, dass über die Querstrebe 15 sowie den seitlich umlaufenden Rahmen 14 eine Folie gezogen ist. Insbesondere sind dazu Längs- und/oder Querstreben 15, 16 hemisphärisch bzw. gewölbt nach außen gerichtet und/oder die Plane 17 ist insbesondere über die Längs- oder Querstrebe 15, 16 miteinander verklebt. Hierdurch ist es möglich, die Plane 17 zu spannen, sodass diese bei Fahrtwind nicht flattert.

Figur 7 a und b zeigen eine jeweilige Detailansicht. Hierbei ist zu erkennen, dass gemäß Figur 7 a die Plane 17 auch das seitliche Profil sowie die Querstrebe 15 übergreifend an einer unteren Ecke umgeschlagen und verzurrt. Gemäß Fig. 7 b ist die Plane 17 mit einem Keder oder einer sonstigen Befestigung in eine obere Nut 18 des seitlich umlaufenen Rahmens eingezogen. Mithin überdeckt die Plane 17 nur die Oberseite, wobei die Seitenwand durch den seitlichen Rahmen verdeckt wird. Diese ausgestandene Erfindung eignet sich insbesondere bei Pop-up-Zelten und/oder Zelten, die durch ein seitliches Aufstellen der Haube gebildet sind. Die Haube selbst dient in diesem Falle nicht wie in Fig. 4 dargestellt, einer 180° Schwenkbewegung, sodass diese auch zum Liegen ausgebildet ist.

### Bezugszeichen:

- 1 -: Dachzeltanordnung
- 2 -: Dachzelt
- 3 -: Dach
- 4 -: Kraftfahrzeug
- 5 -: Oberschale
- 6 -: Unterschale
- 7 -: Stütze
- 8-: Fuß
- 9 -: Untergrund
- 10 -: Zeltkörper
- 11 -: Leiter
- 12 -: Scharnier
- 13 -: Rahmenstruktur
- 14 -: Umlaufener Rahmen
- 15 -: Querstrebe
- 16 -: Längsstrebe
- 17 -: Plane
- 18 -: Nut

## Patentansprüche

1. Dachzeltanordnung (1) geeignet für ein Fahrzeugdach, aufweisend ein Dachzelt (2), welches in einer Ruheposition zusammengeklappt ist und in einer Gebrauchsposition aufgeklappt ist, **dadurch gekennzeichnet, dass** eine Haube, welche das Dachzelt (2) in der Ruheposition überdeckt, eine gitterartige Rahmenkonstruktion aufweist, wobei die Rahmenkonstruktion mit einer Plane (17) bezogen ist.

2. Dachzeltanordnung (1) nach Anspruch 1, **dadurch gekennzeichnet, dass** die Rahmenkonstruktion aus Streben hergestellt ist, insbesondere aus Leichtmetallstreben oder Kunststoffstreben.

3. Dachzeltanordnung (1) nach einem der Ansprüche 1 oder 2, **dadurch gekennzeichnet, dass** die Haube in der Ruheposition zumindest teilweise, insbesondere umlaufend mit einem Boden des Dachzeltes (2) zur Anlage kommt, dergestalt, dass der darin befindliche Zeltköper (10) vor Witterungseinflüssen geschützt ist.

4. Dachzeltanordnung (1) nach einem Ansprüche 1 bis 3, **dadurch gekennzeichnet, dass** die Plane (17) entlang zumindest einer Längsstrebe (16) und/oder Querstrebe (15) befestigt ist.

5. Dachzeltanordnung (1) nach einem der Ansprüche 1 bis 4, **dadurch gekennzeichnet, dass** an dem Dachzelt (2), seitlich von dem Fahrzeug (4) abstehende nach unten orientierte Stützen (7) sowie eine Leiter (11) angeordnet sind, die an dem Dachzelt (2) gekoppelt sind und in der Gebrauchsposition auf einem Untergrund (9) aufstehen.

6. Dachzeltanordnung (1) nach einem der Ansprüche 1 bis 5, **dadurch gekennzeichnet, dass** unterhalb eines Bodens des Dachzeltes (2) Aufnahmen vorhanden sind, in welche ein oberer Teil der Stützen (7) lösbar einsteckbar ist.

7. Dachzeltanordnung (1) nach einem der Ansprüche 1 bis 6, **dadurch gekennzeichnet, dass** die Stützen (7) teleskopierbar sind.

8. Dachzeltanordnung (1) nach einem der Ansprüche 1 bis 7, **dadurch gekennzeichnet, dass** vier Stützen (7) angeordnet sind, insbesondere 2 auf jeder Seite.

9. Dachzeltanordnung (1) nach einem der Ansprüche 1 bis 8, **dadurch gekennzeichnet, dass** auf einer Seite des Fahrzeuges durch seitliches Ausklappen oder Ausziehen des Dachzeltes (2) der ausgeklappte Teil des Dachzeltes (2) zumindest teilweise auf den Aufnahmen der Stützen (7) und/oder den Stützen (7) selber aufliegt.

10. Dachzeltanordnung (1) nach einem der Ansprüche 1 bis 9, **dadurch gekennzeichnet, dass** die Stützen (7) bei Nichtgebrauch in einem Fahrzeug mitgeführt werden.

## Claims

1. Roof tent assembly (1) suitable for a vehicle roof, having a roof tent (2), which is folded in a rest position and unfolded in a use position, **characterised in that** a hood, which covers the roof tent (2) in the rest position, has a grid-like frame structure, wherein the frame structure is covered with a tarpaulin (17).

2. Roof tent assembly (1) according to claim 1, **characterised in that** the frame structure is made from struts, in particular from light metal struts or plastic struts.

3. Roof tent assembly (1) according to any one of claims 1 or 2, **characterised in that**, in the rest position, the hood comes at least partially into contact, in particular peripherally, with a base of the roof tent (2), such that the tent fabric (10) located therein is protected from the weather.

4. Roof tent assembly (1) according to any one of claims 1 to 3, **characterised in that** the tarpaulin (17) is attached along at least one longitudinal strut (16) and/or cross strut (15).

5. Roof tent assembly (1) according to any one of claims 1 to 4, **characterised in that** supports (7) oriented downwards, protruding laterally from the vehicle (4), as well as a ladder (11), which are coupled to the roof tent (2) and stand on a substrate (9) in the use position, are arranged on the roof tent (2).

6. Roof tent assembly (1) according to any one of claims 1 to 5, **characterised in that** there are holders below a base of the roof tent (2), into which an upper section of the supports (7) can be detachably inserted.

7. Roof tent assembly (1) according to any one of claims 1 to 6, **characterised in that** the supports (7) are telescopic.

8. Roof tent assembly (1) according to any one of claims 1 to 7, **characterised in that** four supports (7) are arranged, in particular 2 on each side.

9. Roof tent assembly (1) according to any one of claims 1 to 8, **characterised in that** the unfolded section of the roof tent (2) rests at least partially on the holders for the supports (7) and/or the supports (7) themselves on one side of the vehicle by laterally unfolding or extending the roof tent (2).

10. Roof tent assembly (1) according to any one of claims 1 to 9, **characterised in that** the supports (7) are transported in a vehicle when not in use.

## Revendications

1. Agencement de tente de toit (1) adapté à un toit de véhicule, présentant une tente de toit (2), laquelle est repliée dans une position de repos et est déployée dans une position d'utilisation, **caractérisé en ce qu'**un capot, lequel recouvre la tente de toit (2) dans la position de repos présente une construction de cadre en forme de grille, dans lequel la construction de cadre est couverte par une toile (17).

2. Agencement de tente de toit (1) selon la revendication 1, **caractérisé en ce que** la construction de cadre est fabriquée à partir d'entretoises, en particulier d'entretoises en métal léger ou en plastique.

3. Agencement de tente de toit (1) selon l'une quelconque des revendications 1 ou 2, **caractérisé en ce que** le capot, dans la position de repos, vient en appui au moins partiellement, en particulier circonférentiellement, contre un fond de la tente de toit (2), de sorte que le sergé de tente (10) s'y trouvant est protégé des intempéries.

4. Agencement de tente de toit (1) selon l'une quelconque des revendications 1 à 3, **caractérisé en ce que** la toile (17) est fixée le long d'au moins une entretoise longitudinale (16) et/ou d'une entretoise transversale (15).

5. Agencement de tente de toit (1) selon l'une quelconque des revendications 1 à 4, **caractérisé en ce que** des supports (7) faisant saillie latéralement du véhicule (4) et orientés vers le bas, ainsi qu'une échelle (11), sont disposés sur la tente de toit (2), qui sont couplés à la tente de toit (2) et reposent sur un sol (9) dans la position d'utilisation.

6. Agencement de tente de toit (1) selon l'une quelconque des revendications 1 à 5, **caractérisé en ce que** des logements sont présents sous un fond de la tente de toit (2), dans lesquels une partie supérieure des supports (7) peut être enclenchée de manière amovible.

7. Agencement de tente de toit (1) selon l'une quelconque des revendications 1 à 6, **caractérisé en ce que** les supports (7) sont télescopiques.

8. Agencement de tente de toit (1) selon l'une quelconque des revendications 1 à 7, **caractérisé en ce que** quatre supports (7) sont agencés, en particulier 2 de chaque côté.

9. Agencement de tente de toit (1) selon l'une quelconque des revendications 1 à 8, **caractérisé en ce que** sur un côté du véhicule, en dépliant ou en déployant latéralement la tente de toit (2), la partie dépliée de la tente de toit (2) repose au moins partiellement sur les logements des supports (7) et/ou sur les supports (7) mêmes.

10. Agencement de tente de toit (1) selon l'une quelconque des revendications 1 à 9, **caractérisé en ce que** les supports (7) sont véhiculés dans un véhicule lorsqu'ils ne sont pas utilisés.
